Europäisches Patentamt

(19) European Patent Office

Office européen des brevets

(11) Publication number: **0 053 889**
**B1**

(12) **EUROPEAN PATENT SPECIFICATION**

(45) Date of publication of patent specification: **21.01.87**

(21) Application number: **81305547.2**

(22) Date of filing: **24.11.81**

(51) Int. Cl.⁴: **H 01 M 10/38, H 01 M 4/38, H 01 M 4/58, H 01 M 2/14**

(54) Rechargeable electrical storage battery.

(30) Priority: **26.11.80 US 210739**

(43) Date of publication of application: **16.06.82 Bulletin 82/24**

(45) Publication of the grant of the patent: **21.01.87 Bulletin 87/04**

(84) Designated Contracting States: **AT BE CH DE FR GB IT LI LU NL SE**

(56) References cited:
GB-A-2 005 290
US-A-3 943 001
US-A-3 953 231

(73) Proprietor: **ELTECH SYSTEMS CORPORATION**
**Town Executive Center 6100 Glades Road Suite 305**
**Boca Raton Florida 33434 (US)**

(72) Inventor: **Bennett, John E.**
**1806 West Jackson Street**
**Painesville Ohio 44077 (US)**
Inventor: **Harney, David E.**
**1257 Dorthea Drive**
**Painesville Ohio 44077 (US)**
Inventor: **Mitchell, Thomas A.**
**10211 Page**
**Mentor Ohio 44060 (US)**

(74) Representative: **Cronin, Brian Harold John et al**
**c/o DST SA 3, Route de Troinex**
**CH-1227 Carouge/GE (CH)**

## Description

### Field of the invention

This invention relates to electrical current storage batteries and more specifically to an apparatus and method for a rechargeable electrical current storage cell utilizing a reversible electrochemical reaction between an alkali or alkaline earth metal and sulfur for the storage and release of an electrical current.

### Background art

The basic concept of chemical generation and storage of electricity is quite old. Batteries can be traced to 1795 when Volta discovered that two dissimilar metals, placed in an electrically conductive fluid establish an electromotive force from which an electric current can be tapped. Various materials employed as electrodes, a variety of electrolyte possibilities, and numerous combinations of electrodes and electrolytes subsequently have been the object of considerable experimentation for nearly 200 years.

Electrochemical cells generate power when two energetic materials participate in a controlled oxidation-reduction reaction occurring in an ionically conductive electrolyte. Electrons are transferred in the reaction, and these transferred electrons are collected and distributed by a pair of electrodes generally fabricated from metal, carbon, or the like. Electrons collected at one cell electrode are generally passed through an electrical load circuit before being returned to the other electrode.

There are two basic electrochemical cell types. Secondary, or rechargeable cells generate electrical energy until some unacceptably low power output is reached caused by depletion of the reactants. Electrical current flow through the cell is thereupon reversed to cause a reversal of the oxidation reduction reaction by which the cell generates power. When a suitable portion of the cell reactants have undergone the reverse reaction, the cell is "recharged" and ready again to provide energy.

Primary cells generate power identically by an oxidation reduction until the reactants contained within the cell have essentially become spent. However, for a variety of reasons having their roots in the nature of the cell reaction or the cell physical configuration, current reversal to recharge the battery is not practical, and the cell is discarded or perhaps recycled.

In much battery development, emphasis has traditionally focused upon locating reactants producing a large amount of energy for a given reactant weight and volume. In addition, it has been necessary to locate conductive electrolytes, chemically compatible with the reactants. However, in larger rechargeable batteries, emphasis has traditionally focused upon improvements to battery electrodes and electrolytes aimed at producing a reasonably efficient battery at very low cost. As a result of this emphasis, these batteries have frequently incorporated individual electrochemical reactants to generate the electromotive energy producing relatively small amounts of energy for a given weight of reactants. As a result of such a low ratio of evolved energy to weight, relatively large amonts of the reactants necessarily have been included in these rechargeable batteries to produce a desired current over a required period of time. For example, according to theoretical calculations, the energy density capability of a lead acid storage battery is about 200 watt-hours per kilogram of reactants.

More recently, in an effort to develop transportation alternatives for use in an impending world oil shortage, attempts have been made to power automotive vehicles utilizing electrically powered drive trains drawing electricity from storage batteries contained within the automotive vehicle. An automotive vehicle driven utilizing power provided by batteries carried within the vehicle is transporting the weight of not only the vehicle and its contents, but also of the storage batteries. It is known that vehicle efficiency is strongly dependent upon the weight carried within the vehicle. It has been found that automotive vehicles driven utilizing electrical current from conventional storage batteries having a relatively low energy density generally are not satisfactory. A conventional storage battery providing sufficient electrical current to operate a reasonable commodious automotive vehicle at acceptable speeds and over an acceptable distance is necessarily so weighty that efficient vehicle operation is impaired seriously.

Various attempts have been made to develop a rechargeable storage battery providing a relatively large amount of electromotive energy per unit weight of the battery. Those skilled in the art, referring to the Periodic Table of Elements, have long recognized the alkali and alkaline earth metals and sulfur as possessing the desirable high energy and low weight characteristics. Electrochemical reactions between lower atomic weight alkali metals and sulfur and between lower atomic weight alkaline earth metals and sulfur have long been recognized as potentially providing relatively large energies of reaction from reactants of attractively low weight. For example, according to theoretical calculations, a lithium sulfur battery can produce 2600 watt-hours of energy per kilogram of reactants, a lithium iron disulfide battery about 1100 watt-hours.

A number of proposals have attempted to pair alkali or alkaline earth metals with sulfur to produce an efficient storage battery. Many of these proposals have related to primary batteries, that is, batteries designed to use the electrochemical energy of freshly activated battery reactants only once; recharging of these batteries not being contemplated. Alkali or alkaline earth metals reacting with sulfur in such primary batteries have been found to provide acceptable primary battery performance, particularly where an anhydrous electrolyte such as ammonia has been used in the battery. Under anhydrous conditions batteries utilizing, for example, a lithium-sulfur electrochemical reaction pair will produce adequate electrical voltage at operating temperatures significantly below those where an aqueous battery would have become nearly dormant.

Previous proposals for rechargeable batteries utilizing an electrochemical reaction pair involving an alkali or alkaline earth metal and sulfur have proven less satisfactory.

In one proposal, sodium and molten sulfur have been selected as the oxidation reduction reactants. However, the high temperature required in these sodium sulfur batteries has caused serious practical difficulties associated with both heat insulation, particularly of buses and bus connections, and the make-up supply of heat during periods of extended battery dormancy. Battery housing materials, by necessity, must resist both the elevated temperature and corrosive attack from the reactants. Impurities such as moisture are generally severely dysfunctional to these batteries.

In another high temperature battery, lithium and iron disulfide in a molten salt electrolyte comprise the reactant pair. Beyond the same problems associated with high temperature sodium sulfur batteries, these lithium-iron disulfide cells can suffer from temperature induced iron disulfide instability and short cycle lives attributable at least in part to material migration difficulties.

There have been proposals for the use of an alkali, or alkaline earth metal sulfur, cell-oxidation reduction reaction at ambient temperature. In one such proposal, alkali metal-sulfur electrochemical reaction pairs such as lithium-titanium disulfide or lithium-sulfur have been utilized in combination with organically based electrolytes including dissolved salts. Short cycle lives of such batteries combined with a slow reaction between the organic electrolyte and the alkali metals such as lithium or sodium have dampened development of such batteries. Further, no wholly satisfactory organic electrolyte has yet been found particularly with respect to ionic conductivity. A low ionic conductivity tends not to support adequate cell discharge rates.

In another proposal, electrochemical batteries have utilized a cation producing alkali or alkaline earth metal anode and sulfur cathode together with an electrolyte solute such as an inorganic nitrate or perchlorate of the metal cation dissolved in a cell fluid such as ammonia. Such cells or batteries have demonstrated a capability of being recharged but also have demonstrated rapid decay in cell performance as measured by a reduced current and voltage output of the cell with each subsequent recharging. This decay in cell performance has been attributed to competing reactions between the chemical reactants within the cell, thereby reducing the quantity of chemicals available for storage of current.

It has been further proposed that such cells be divided to separate cell chemical components from one another in an effort to reduce the competing reactions between the electrochemical components. Division has not yet produced a wholly effective rechargeable alkali metal or alkaline earth metal-sulfur battery cell. One significant factor interfering with effective divided cell performance has centered about difficulties in finding a satisfactory divider material that resists destructive effects of fluids in the cell and yet passes metal cations. Another factor has been lack of a suitable supporting electrolyte for use in the cells that does not contribute significantly to competing cell reactions.

Water has long been a favored electrolyte solvent for use in rechargeable batteries. Water has not proven successful as an electrolyte solvent for batteries utilizing alkali and alkaline earth metal-sulfur reactions. Many of the metals react violently with water, and most forms of sulfur useful in the battery reaction are at best insufficiently soluble in the water.

Liquid ammonia exhibits many of the properties that make water a highly desirable electrolyte solvent. $NH_3$ is highly hydrogen bonded, resulting in an unusually elevated boiling point and a substantial heat of vaporization. Ammonia is a protonic, ionizing solvent superior to virtually all but water in dissolving a wide range of electrolyte salts; some salts conduct electricity better in $NH_3$ than in water.

Yet there are differences between water and liquid ammonia. $NH_3$ liquid is known to dissolve alkali and alkaline metals to form solutions of a metallic nature when concentrated. These so-called bronzes generally process characteristics of both electronic and ionic conductance. Such dual properties can be attractive in batteries.

These bronzes have been generally recognized as thermodynamically unstable; some literature reporting half lives as short as 190 hours. Such half lives would preclude utility in most battery applications.

Ammonia is characterized by a theoretical dissociation voltage of 77 millivolts at 25°C. Such a low voltage would seem to seriously limit the use of ammonia in batteries wherein individual cell voltages of in excess of one volt are highly desired. Later evidence has indicated that the actual dissociation voltage of ammonia is significantly in excess of 77 millivolts as a result of significant electrode overvoltages. For these and other reasons, except for use in some primary batteries wherein the ammonia was introduced into the battery immediately prior to battery use, ammonia and ammonia bronzes have not been utilized extensively in batteries.

The use of sulfur as a cathode in conjunction with an ammonia solvent has been suggested since sulfur readily dissolves in ammonia. The kinetics of cell electrochemical reactions in which elemental sulfur is dissolved in ammonia together with such supporting electrolytes have been determined to be quite slow, potentially limiting current flow rates when applied to batteries. Previous proposals have attempted to utilize a sulfur cathode in conjunction with an ammonia electrolyte by the addition of compounds such as alkali metal nitrates, perchlorates, thiocyanates, and the like.

U.S. 3,943,001 relates to an electrochemical cell with silver sulfide as insoluble reducible cathode material, an anode and liquid ammonia electrolyte containing sulphur and $H_2S$ in solution. The silver sulfide can be formed by reaction of silver with sulphur dissolved in liquid ammonia, and may be polysulfide. A concentrated solution of lithium in ammonia can be used as the anode material. The document is directed to use of silver sulfide as a rechargeable cathode for batteries or fuel cells utilizing ammonia electrolytes. The particular features of the invention disclosed in this document is based on the finding that when the silver sulfide cathode is employed the monovalent silver atoms act as electron-acceptors. It is stated that other metallic sulfide compounds do not have the same unique properties in liquid ammonia as silver sulfides. Stated advantages of the cell include the elimination of the need of diaphragms, separators, binders or grids to confine the active material and that it can be used at sub-zero temperatures.

Disclosure of the invention

The present invention relates to a rechargeable electrical storage battery utilizing an electrochemical reaction between an alkali metal or alkaline earth metal and sulfur.

A battery made in accordance with this invention includes a housing surrounding a central chamber. A partition divides the chamber into two compartments. The partition is sealed to the housing to substantially resist movement of fluids between compartments.

A liquid anode is placed within one of the compartments and electrically connected with the outside of the housing. A cathode of a suitable or conventional type is positioned within the other compartment in electrical communication with the outside of the housing. The compartment containing the cathode also contains a catholyte fluid that includes sulfur or metal polysulfides. A provision is made for equalizing pressure between the compartments.

The liquid anode results from contacting anhydrous ammonia with a desired alkali or alkaline earth metal. In liquid anode prepared for use in cells of this invention, the metal will be present in the anhydrous ammonia in a range of from about 50 percent of saturation to saturation of the ammonia. The catholyte is a blend of anhydrous ammonia and sulfur or anhydrous ammonia and polysulfides corresponding to the metal comprising the liquid anode or a mixture of both sulfur and metal polysulfides in anhydrous ammonia.

It is a surprising and unique aspects of this invention that this catholyte supports adequate cell current flow best in the absence of supporting electrolytes, contrary to the thinking and practice in the prior development of batteries replying upon a reaction between an alkali or alkaline earth metal and sulfur.

The partition separating the compartments is of a type freely permeable to cations of the metal but substantially resisting passage of sulfur and metal polysulfides between the compartments. During discharge of the battery, cations of the metal are released by the liquid anode producing electrons within the anode solution. These cations pass through the partition from the anode compartment to the cathode compartment. The cations react with metal polysulfides in the cathode compartment which absorb electrons from the cathode. Upon recharging of the battery, the metal polysulfides surrender electrons to the cathode, and the metal cations pass through the partition from the cathode compartment to the anode compartment returning to the liquid anode where electrons are reabsorbed.

In a preferred embodiment, the liquid anode is formed by contacting lithium or sodium metal with anhydrous ammonia. Where sodium is dissolved in the ammonia to form the liquid anode, the sodium is present in the liquid ammonia in a concentration range of between 60 percent of saturation and saturation. Where the liquid anode is prepared by contacting lithium metal with anhydrous ammonia, the lithium metal is present in the ammonia in a range of concentration of from about 12 mole percent to about 20 mole percent.

The catholyte is prepared by blending polysulfides corresponding to the metal of the liquid anode into anhydrous ammonia. Where the liquid anode metal is sodium, the catholyte is prepared by blending sodium polysulfides in a composition range of from $Na_2S_4$ to $Na_2S_{18}$ and in a concentration of from 2 moles per liter to saturation in the ammonia. Where the liquid anode metal is lithium, the catholyte is prepared by blending lithium polysulfides in a range of composition of from $Li_2S_4$ to $Li_2S_{18}$ and in a range of concentration of from 2 moles per liter to saturation in the ammonia.

Generally, cells utilizing catholytes employing shorter chain polysulfides tend to exhibit reduced voltage and current characteristics from those utilizing longer chain polysulfides. Cells utilizing longer chain polysulfides tend to undergo more rapid decay in cell performance following successive rechargings than cells utilizing shorter chain polysulfides. Polysulfides including a range of between $Li_2S_4$ and $Li_2S_{18}$ and including a range of $Na_2S_4$ and $Na_2S_{18}$ provide a generally satisfactory compromise between cell life and cell efficiency.

In one version of a preferred embodiment, the partition is a thin sheet membrane formed from a blend of materials that include a substantial proportion of a copolymer of polyethylene and methacrylic acid or a copolymer of polypropylene and methacrylic acid or a polyethylene cation exchange membrane radiation grafted with sulfonic or carboxylic acid. Depending upon the nature of the cell chemicals, a microporous membrane such as microporous polypropylene, microporous alumina or glass frit may be utilized. It has been found that sulfur migration across the partition is a significant contributor to decay in cell performance following repeated rechargings and that the selection of a membrane for a particular cell will be governed to a large degree by its resistance to sulfur migration in the particular cell environment.

The above and other features and advantages of the invention will become apparent from the following detailed description of the invention made with reference to the accompanying drawings which form a part of the specification.

Description of the drawings

Figure 1 is a frontal view of a battery cell made in accordance with this invention.

Figure 2 is an exploded view of the cell of Figure 1 viewed from the anode end of the cell.

Figure 3 is an exploded view of the cell of Figure 1 viewed from the cathode end of the cell.

Figure 4 is a graph of cell voltage vs. time for consideration in conjunction with Example IV.

Best mode for carrying out the invention

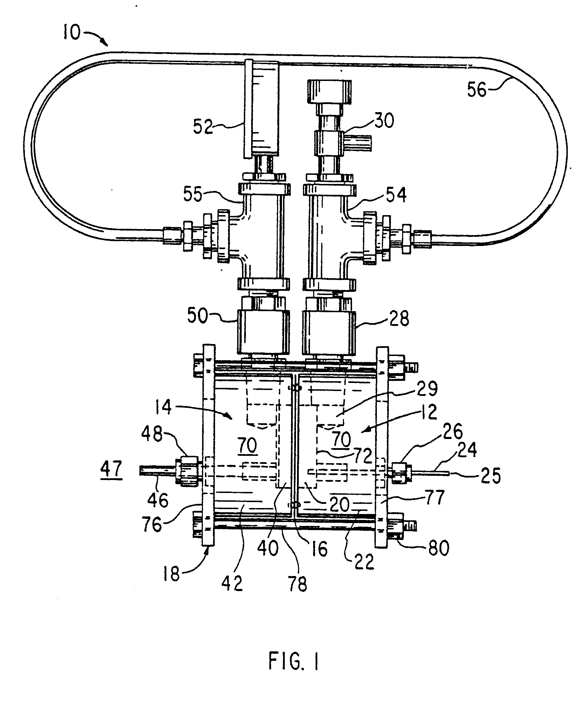

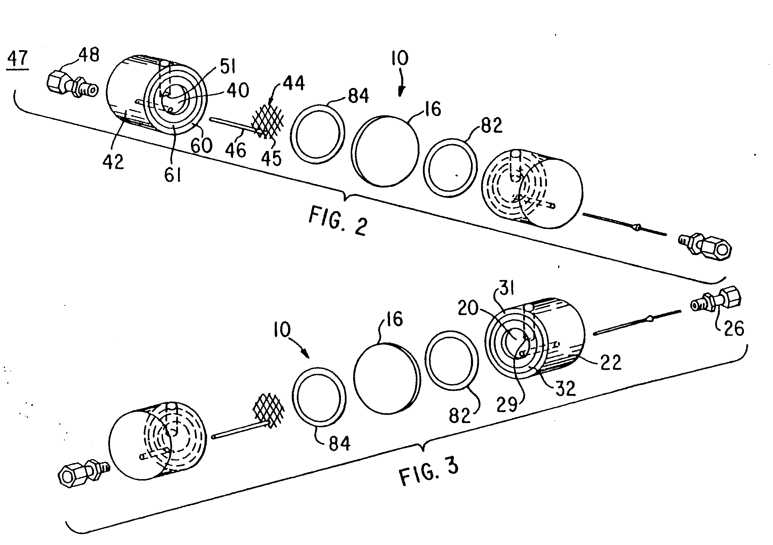

Referring to the drawings, an electrical storage battery cell 10 is shown in Figures 1—3. The cell is comprised of an anode subassembly 12, a cathode subassembly 14, a divider 16 or partition separating the subassemblies and a retaining assembly 18 joining the subassemblies. Assembled and properly filled, the cell is capable of rechargeably storing and releasing electrical current utilizing electrochemical reactions.

The anode subassembly is comprised of an anode compartment 20 formed by any suitable or conventional method within a generally cylindrical anode subhousing 22, and an anodic electrical current connection 24 or feeder between the compartment 20 and a point 25 outside of the subhousing 22. The electrical connector 24 is fabricated from a suitable or conventional material such as titanium, stainless steel or the lke. A fitting 26 supports the electrical connector 24 within the anode compartment 20 and performs as a seal, cooperating with the electrical connector 24 to resist leakage of fluid contained in the anode compartment 20 along the electrical connector 24 to the exterior of the subhousing 22 while the cell 10 is assembled and in use.

A fluid inlet 28 is provided for introducing a liquid anode into the anode compartment. A fluid passage 29 communicates fluid through the subhousing 22 from the fluid inlet 28 to the anode compartment 20. A valve 30 is provided to retain fluid within the anode compartment.

The subhousing 22 includes a mating surface 31. A groove 32 of a size and shape suitable for receiving an "O" ring is formed in the mating surface.

When assembled into a cell, the anode subhousing is subject both to internal pressure generated by chemicals such as ammonia contained within the cell and to chemical attack by those contained chemicals. The housing, therefore, is formed from a material resistant to attack by chemicals contained within the cell and of a sufficient thickness and strength to withstand pressures anticipated within the anode compartment during operation of an assembled cell. In the best embodiment, the anode subhousing 22 is formed from a plastic material such as polyethylene, polypropylene, or the like.

The cathode subassembly 14 is comprised of a cathode compartment 40 formed by any suitable or conventional method within a generally cylindrical cathode subhousing 42 and a cathode 44. Like the anode subhousing 22, and for the same general considerations, the cathode subhousing 42 is formed from a plastic material such as polypropylene, polyethylene or the like of a sufficient thickness and strength to withstand pressures anticipated within the cathode compartment during operation of an assembled cell.

The cathode 44 is comprised of generally circular metal mesh structure 45, and an electrical connector 46 fixedly supporting the mesh structure 45, and electrically communicating between the mesh structure 45 and a point 47 outside the cathode subhousing 42. A cathode seal fiting 48 retains the electrical connector 46 in a predetermined position within the cathode compartment 40, thereby positioning the mesh structure 45 within the cathode compartment 40.

In the best embodiment, the cathode 44 is a dimensionally stable electrode comprising a generally well-known valve metal such as titanium, tin, ruthenium, and titanium oxides. Depending upon the chemicals utilized within the cell, other suitable or conventional cathode materials, including but not limited to, other valve metals coated with suitable coating systems, and carbon, may be used. Any such other cathode materials utilized must be relatively impervious to attack by chemical compounds contained or naturally occurring within the cell.

Any alternative cathode materials must be of a suitable or conventional type for catalyzing the electrochemical reaction of sulfur or the alkali metal polysulfides.

A cathodic fluid inlet 50 is provided upon the cathode subhousing 42 for introducing a catholyte liquid into the cathode compartment 40. An inlet passage 51 communicates through the subhousing 42 between the fluid inlet 50 and the cathode compartment 40. A stopper 52 is provided to retain catholyte within the cathode compartment 40 when the cell is assembled. In the best embodiment, this stopper 52 also performs as a pressure gauge.

Connections 54, 55 are provided respectively on the anode fluid inlet 28 and the cathode fluid inlet 50. These connections are joined by a conduit 56 whereby pressures in the anode compartment 20 and the cathode compartment 40 can be equalized.

The cathode subhousing 42 includes a mating surface 60. A groove 61 is formed in the mating surface of a size and shape suitable for receiving an "O" ring.

The subassemblies 12, 14 are joined utilizing the retaining assembly 18 to form the electrical storage cell 10. The mating surfaces 31, 60 of the subhousing 22, 42 are pressed together joining the subhousings 22, 42 and compartments 20, 40 into a generally cylindrical housing 70 having a central chamber 72 as shown in phantom in Figure 1. Retaining plate 76, 77 are positioned at each end of the housing and the plates are connected by strain rods 78 threaded over a portion of their length and attached to the plate, using fasteners 80. Tightening the fasteners presses the mating surface 31, 60 together.

The divider or partition 16 separates the anode and cathode compartments 20, 40 of the chamber 72. An "O" ring 82 is carried in one of the grooves 31, 61. The divider 16, of a size somewhat larger than a diameter of the "O" ring, is positioned between the mating surfaces 31, 60 and is then pressed into the unoccupied groove, if flexible, or against a second "O" ring 82 as the fasteners 80 are tightened to force the mating surfaces one toward the other. Interaction between the grooves 32, 61, the "O" ring 82, the second "O" ring, if used, and the divider 16 effectively seals against fluid communication between the compartments and fluid leakage from the chamber between the mating surfaces.

Typically, the anode compartment of a completed cell is charged with a liquid anode formed by contacting anhydrous ammonia with an alkali metal or alkaline earth metal such as lithium, sodium, or the like. The cathode compartment is charged with a catholyte such as ammonia containing dissolved sulfur either in the form of elemental sulfur or in the form of metal polysulfides corresponding to the anode metal. Typically where the anode metal is lithium, the corresponding polysulfide is one of, or a mixture of, polysulfides ranging in composition from $Li_2S_4$ to $Li_2S_{18}$. When the anode metal is sodium, the corresponding polysulfide is one of, or a mixture of, polysulfides ranging in composition from $Na_2S_4$ to $Na_2S_{18}$.

The divider 16 retains electrochemical reactants, that is, the liquid anode and the catholyte, within the compartments, but is freely permeable to cations of the anode metal. The divider particularly must function to retain sulfur within the cathode compartment. Sulfur entering the anode compartment reacts with the liquid anode, removing reactants from electrochemical activity within the cell, and decreasing the electrochemical capacity that can be stored within and released from the cell, as well as interfering with movement of cations through the divider.

A number of materials have been found effective in inhibiting migration of sulfur from the cathode compartment to the anode compartment while remaining freely permeable to anode cations. An effective group of partitions has been identified as polyethylene or polypropylene based cation exchange membranes that include functional groups of sulfonic or carboxylic acid such as a polyethylene cationic exchange membrane radiation grafted with sulfonated styrene, manufactured as R-5010 by RAI Research Corporation. Membranes containing a substantial proportion of a copolymer of polyethylene and acrylic or methacrylic acid, or a copolymer of polypropylene and acrylic or methacrylic acid, such as Permion® 2291 40/20 or Permion® E-6001 membranes manufactured by RAI, or EAHT-1575 membranes manufactured by SAC, have been found to perform effectively as dividers. Other effective dividers have been found to be partitions having sintered glass "windows", microporous polypropylene membranes such as Cellgard® 5511, Daramic® microporous membranes formed from glass filled polypropylene, dividers of microporous aluminium oxide and elastomeric membranes including an aluminium oxide "window".

The following examples further illustrate the invention:

Example I

A cell structure is prepared according to the best means for carrying out the invention. The cell subhousing are constructed from polypropylene. A Permion 2291 40/20 membrane presenting a 16 square centimeter active surface to the cell is positioned between the cell subhousings to perform as a divider. The anode compartment is charged with a liquid anode prepared by contacting 18 ml of anhydrous liquid ammonia with 1.8 grams sodium. A catholyte is prepared by dissolving 2.9 grams elemental sulfur in 18 ml of anhydrous liquid ammonia. This catholyte is charged to the cathode compartment which includes a titanium substrate cathode coated with a mixture of tin, titanium and ruthenium oxides. The cell is closed and electrically connected to a conventional testing instrument. The cell is discharged at a rate of 10 milliamperes per square centimeter of membrane surface or 160 milliamperes over a period of 2 hours. The cell voltage at the commencement of discharge. The cell is then repeatedly recharged and discharged at 160 milliamperes for periods of one hour during which recharging the voltages range between 2.4 volts and 2.6 volts. During cell discharge, the voltages range between 2.0 volts and 1.5 volts.

Example II

A rechargeable cell is assembled in accordance with the invention including polypropylene subhousings, a titanium anodic current feeder, a titanium cathode coated with a mixture of tin, titanium, and ruthenium oxides, and a Permion 2291 40/20 membrane having a 16 cm² active area. 18 ml liquid anode containing 4.76 moles lithium per liter ammonia is charged to the anode compartment, and 18 ml of catholyte containing $Li_2S_{10}$ dissolved in liquid ammonia in a concentration of 5 moles (sulfur) per liter is charged to the cathode compartment. Connected to a conventional testing instrument, the cell is discharged 4 hours at 78 milliamperes producing a voltage declining from an initial 2 volts to 1.8 volts. The cell is then repeatedly charged and discharged for 2-hours periods at 78 milliamperes with discharge voltages being generally between 2.0 volts and 1.8 volts.

Example III

A rechargeable cell is assembled in accordance with this invention including polypropylene subhousings, a stainless steel anodic current feeder, a titanium cathode coated as in Example I and a Permion 2291 40/20 membrane having an active area of 16 cm$^2$. 18 ml of liquid anode containing sodium dissolved in liquid anhydrous ammonia in a concentration of 3.73 moles per liter is charged to the anode compartment, and 18 ml of catholyte containing $Na_2S_{10}$ dissolving in anhydrous ammonia in a concentration of 5 moles (sulfur) per liter is charged to the cathode compartment. The cell is connected to a conventional current and voltage monitor and discharged at 100 milliamperes for one hour and then alternately charged and discharged at 100 milliamperes for half-hour periods with the cell voltage being between 1.9 and 2.2 volts during discharge and between 2.3 and 2.9 volts during charging.

Example IV

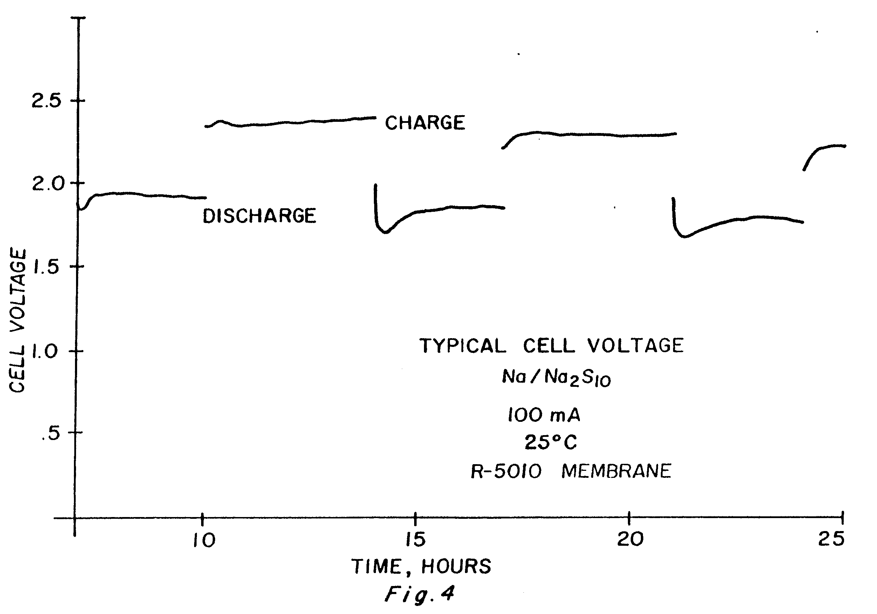

A rechargeable cell is assembled in accordance with this invention including polypropylene subhousing, a stainless steel anodic current feeder, a titanium cathode coated as in Example I, and a polyethylene cationic ion exchange membrane radiation grafted with sulfonated styrene, and having an active area of 16 cm$^2$. 18 ml of a 4.35 mole/liter solution of sodium in anhydrous liquid ammonia is charged to the anode compartment, and 18 ml of a 5 moles (sulfur)/liter solution of $Na_2S_{10}$ in liquid ammonia is charged to the cathode compartment. The cell is connected to a conventional testing instrument and is alternately discharged at 100 milliamperes for 3 hours and recharged at 100 milliamperes for 4 hours during which time the voltage during discharge averaged 1.70 volts, and the voltage during charge averaged 2.15 volts. Figure 4 is a representation of typical cell voltages achieved in this example.

Example V

A rechargeable cell is assembled in accordance with this invention including polypropylene subhousings, a stainless steel anodic current feeder, a titanium cathode coated as in Example I and a membrane of a copolymer of ethylene and acrylic acid having a 16 cm$^2$ area. The anode compartment was charged with 18 ml of a 4.14 mole/liter solution of sodium in liquid ammonia, and the cathode compartment was charged with 18 ml of 5 moles (sulfur)/liter solution of $Na_2S_{10}$ in liquid ammonia. The cell is connected to a conventional testing instrument and alternately discharged and charged at 21.7 milliamperes for 14-minutes periods during which time the discharge voltage averaged 1.60 and the charge voltage average 2.40 volts over 230 charge-discharge cycles.

Example VI

A rechargeable cell is assembled in accordance with the instant invention polypropylene subhousings, a stainless steel anodic current feeder, a titanium cathode coated as in Example I and a 0.080-inch (about 2 mm) thick a aluminum oxide partition having nominal one micrometer pores. The anode compartment is charged with 18 ml of a 4.1 mole per liter bronze of sodium and anhydrous $NH_3$ and the cathode compartment is charged with 18 ml of a 5 moles (sulfur) per liter of $Na_2S_{10}$ in anhydrous $NH_3$. Connected to a conventional testing instrument, the cell was discharged and charged for alternate 30-minutes periods at a 100 milliamperes rate. The cell voltages during discharge were about 1.90 volts and during charging about 2.5 volts. The cell displayed an open circuit voltage of 2.2 volts.

The cell reactions for a cell made in accordance with this invention and utilizing a catholyte containing monovalent metal polysulfides of the form $M_2S_x$ have been postulated as follows:

at the anode: $2M \rightarrow 2M^+ + 2e^-$
at the cathode: $2M^+ + (x-1)M_2S_x + 2e^- \rightarrow xM_2S_{(x-1)}$

for a reversible cell reaction of:

$$2M + (x-1)M_2S_x \overset{2F}{\rightleftharpoons} xM_2S_{(x-1)}$$

A similar cell reaction has been postulated for divalent metal polysulfides of the form $MS_x$ to wit:

$M \rightarrow M^{++} + 2e^-$
$M^{++} + (x-1)M_2S_x + 2e^- \rightarrow xMS_{(x-1)}$

for a reversible cell reaction of:

$$M + (x-1)MS_x \overset{2F}{\rightleftharpoons} xMS_{(x-1)}$$

Similar reactions will be apparent to those skilled in the art for cells employing catholyte containing only sulfur.

Although a single embodiment of a preferred form of the invention has been illustrated and described in detail, the present invention is not to be considered limited to the precise construction disclosed.

**Claims**

1. A rechargeable electric storage cell employing liquid ammonia as an electrolyte solvent and a sulfur-containing catholyte liquid, and having an internal chamber subdivided into separate cathode and anode compartments with a selectively ion-permeable, liquid-impermeable divider therebetween as well as electrical communication means from outside the cell to the inside of each of said compartments, characterized in that a solution of an alkali or alkaline earth metal in anhydrous ammonia serves as liquid anode in the anode compartment and pressure equalization means communicating between said cathode and anode compartments is provided within the cell.

2. The electric storage cell of claim 1 wherein the liquid anode comprises sodium dissolved in anhydrous ammonia in a concentration between 60 percent of saturation and saturation, and the catholyte liquid comprises a blend of sodium polysulfides having a composition within the range from $Na_2S_4$ to $Na_2S_{18}$ dissolved in anhydrous ammonia, the catholyte having a concentration of sodium polysulphides between 2 moles per liter and saturation of the ammonia.

3. The electric storage cell of claim 1 wherein the liquid anode comprises lithium dissolved in anhydrous ammonia in a concentration between 12 mole percent and 20 mole percent, and the catholyte liquid comprises a blend of lithium polysulfides having a compositions within the range from $Li_2S_4$ to $Li_2S_{18}$ dissolved in anhydrous ammonia, the catholyte having a concentration of lithium polysulphides between 2 moles per liter and saturation of the ammonia.

4. The electric storage cell of claims 1, 2 or 3 wherein the divider is a cationic exchange membrane based upon one of polyethylene and polypropylene and having functional groups selected from sulfonic acid, carboxylic acid, and mixtures thereof.

5. The electric storage cell of claims 1, 2 or 3 wherein the divider includes as its principal constituent one of glass frit, sintered glass, microporous polypropylene, glass filled microporous polypropylene, and aluminium oxide.

## Patentansprüche

1. Wiederaufladbare elektrische Batterie mit flüssigem Ammoniak als Elektrolytlösungsmittel und einer schwefelhaltigen Katholytflüssigkeit mit einer Innenkammer, welche durch einen selektiv für Ionen durchlässigen, für Flüssigkeit undurchlässigen Scheider in getrennte Kathoden- und Anodenabteile unterteilt ist, sowie mit elektrischen Verbindungen von der Außenseite der Batterie in das Innere jedes der genannten Abteile, dadurch gekennzeichnet, daß eine Lösung eines Alkali- oder Erdalkalimetalls in wasserfreiem Ammoniak als flüssige Anode in dem Anodenabteil dient und daß Druckausgleichsmittel im Inneren der Batterie vorgesehen sind, welche die Kathoden- und Anodenabteile miteinander verbinden.

2. Elektrische Batterie gemäß Anspruch 1, bei welcher als flüssige Anode Natrium gelöst in wasserfreiem Ammoniak in einer Konzentration zwischen 60% der Sättigung bis zur Sättigung dient und die Katholytflüssigkeit eine Mischung von Natriumpolysulfiden mit einer Zusammensetzung im Bereich von $Na_2S_4$ bis $Na_2S_{18}$ gelöst in wasserfreiem Ammoniak ist, wobei der Katholyt eine Konzentration an Natriumpolysulfiden zwischen 2 Mol/l und der Sättigung des Ammoniaks aufweist.

3. Elektrische Batterie gemäß Anspruch 1, bei welcher als flüssige Anode Lithium gelöst in wasserfreiem Ammoniak in einer Konzentration zwischen 12 Mol% und 20 Mol% dient und die Katholytflüssigkeit eine Mischung von Lithiumpolysulfiden mit einer Zusammensetzung in dem Bereich von $Li_2S_4$ bis $Li_2S_{18}$ gelöst in wasserfreiem Ammoniak ist, wobei der Katholyt eine Konzentration an Lithiumpolysulfiden zwischen 2 Mol/l und der Sättigung des Ammoniaks aufweist.

4. Die elektrische Batterie gemäß den Ansprüchen 1, 2 oder 3, bei welcher der Scheider eine Kationenaustauscher-Membran auf Basis von Polyethylen oder Polypropylen ist, die als funktionelle Gruppen Sulfonsäuregruppen, Carbonsäuregruppen und Mischungen derselben enthalten.

5. Die elektrische Batterie gemäß den Ansprüchen 1, 2 oder 3, bei welcher der Scheider als Hauptbestandteil eine Glasfritte, gesintertes Glas, mikroporöses Polypropylen, mit Glas gefülltes mikroporöses Polypropylen oder Aluminiumoxid enthält.

## Revendications

1. Accumulateur électrique rechargeable utilisant de l'ammoniac liquide en tant que solvant pour électrolyte et un liquide formant catholyte contenant du soufre, et comportant une chambre interne subdivisée en compartiments cathodique et anodique séparés, un séparateur, sélectivement perméable à des ions et imperméable aux liquides, interposé entre ces compartiments ainsi que des moyens de connexion électriques s'étendant de l'extérieur de la cellule à l'intérieur de chacun desdits compartiments, caractérisé en ce qu'une solution d'un métal alcalin ou alcalinoterreux dans de l'ammoniac anhydre sert d'anode liquide dans le compartiment anodique et en ce que des moyens d'égalisation de pression faisant communiquer les compartiments cathodique et anodique entre eux sont prévus à l'intérieur de la cellule.

2. Accumulateur électrique selon la revendication 1, caractérisé en ce que l'anode liquide comprend du sodium dissous dans de l'ammoniac anhydre à une concentration allant de 60 pour cent de saturation à saturation et en ce que le liquide formant catholyte comprend un mélange de polysulfures de sodium présentant une composition comprise dans la gamme allant de $Na_2S_4$ à $Na_2S_{18}$ dissous dans de l'ammoniac anhydre, le catholyte présentant une concentration de polysulfures de sodium comprise entre 2 moles/litre et la saturation de l'ammoniac.

3. Accumulateur électrique selon la revendication 1, caractérisé en ce que l'anode liquide comprend du lithium dissous dans de l'ammoniac anhydre à une concentration comprise entre 12 et 20 mole % et en ce que le liquide formant catholyte comprend un mélange de polysulfures de lithium présentant une composition comprise dans la gamme allant de $Li_2S_4$ à $Li_2S_{18}$ dissous dans de l'ammoniac anhydre, le catholyte présentant une concentration de polysulfures de lithium comprise entre 2 moles par litre et la saturation de l'ammoniac.

4. Accumulateur électrique selon l'une quelconque des revendications précédentes, caractérisé en ce que le séparateur est une membrane échangeuse de cations à base de polyéthylène ou de polypropylène et qui comporte des groupes fonctionnels choisis parmi l'acide sulfonique, l'acide carboxylique et des mélanges de ceux-ci.

5. Accumulateur électrique selon l'une quelconque des revendications 1, 2 et 3, caractérisé en ce que le séparateur comporte, en tant que constituant principal, de la fritte, du verre fritté, du polypropylène microporeux, du polypropylène microporeux chargé de verre, ou de l'alumine.

FIG. 1

1

FIG. 2

FIG. 3

TYPICAL CELL VOLTAGE

$Na / Na_2S_{10}$

100 mA

25°C

R-5010 MEMBRANE

CELL VOLTAGE

TIME, HOURS

Fig. 4

CHARGE

DISCHARGE

0 053 889